# EUROPEAN PATENT SPECIFICATION

(11) **EP 4 001 528 B1**
(45) Date of publication and mention of the grant of the patent: **15.04.2026**
(21) Application number: 20209485.0
(22) Date of filing: 24.11.2020
(51) Int. Cl.: E03F 5/22, G06G 7/50

(54) **METHOD FOR MONITORING THE OPERATION OF A PUMP STATION**
VERFAHREN ZUR ÜBERWACHUNG DES BETRIEBS EINER PUMPSTATION
PROCÉDÉ PERMETTANT DE SURVEILLER LE FONCTIONNEMENT D'UNE STATION DE POMPAGE

(43) Date of publication of application: 25.05.2022
(73) Proprietor: Xylem Europe GmbH, 8200 Schaffhausen (CH)
(72) Inventor: WESSMAN, Martin, 169 40 Solna (SE); IRESTEDT, Nils, 115 37 Stockholm (SE); FULLEMANN, Alexander, 118 69 Stockholm (SE)
(74) Representative: Brann AB

(56) References cited:
- EP-A1- 2 088 401
- EP-A1- 2 796 724
- EP-A1- 3 567 173

## Description

### Technical field of the Invention

The present invention belongs to the technical field of pump stations and methods for monitoring the operation of such pump stations, especially pump stations configured for pumping liquid comprising solid matter, such as wastewater. The pump station comprises a tank for temporary storage of a liquid, an inlet for influent liquid, an outlet and at least one pump configured for transporting the liquid away from the tank via said outlet.

### Background of the Invention

A pump station typically has a reservoir for holding a liquid, such as a well, a sump, a holding tank or a tank. In some pump stations, there may be multiple wells/sumps that are separated from or connected to each other. One or more pumps can be used to transport liquid into or out of the reservoir. For example, pumps may be used to transport sewage out of sumps in sewage pump stations, or to pump fresh water into holding tanks in clean water boost stations.

A typical liquid reservoir for wastewater has an inlet to admit liquid to enter the tank and an outlet through which the liquid is removed/discharged from the tank. Each liquid reservoir has one or more pumps associated with the outlet. The pumps, when activated and in operation, transport the liquid, as required based on appropriate control signals. A single operator may have responsibility for many pump stations scattered over vast geographic areas, for instance the operator may have responsibility for hundreds or thousands of individual pumps. It is known to maintain and service pumps and pump stations at regular time intervals. However, this may result in pumps that are operating within acceptable parameters being serviced when not needed, and faulty pumps not being maintained when needed, thus resulting in failure. It is also known to monitor pump operating parameters, such as the individual pump efficiency (the electrical energy required to move a fixed volume of liquid), to determine whether a pump station is operating within acceptable parameters, and normal pump station service is based on the monitored parameters. However, the pump stations operate under different conditions, i.e. different operational environments, in relation to each other and also over time.

The population of urban areas, and the presence of industries and companies, change all the time and thereby the generation of wastewater change over time in each specific area. Each wastewater transportation system, upon installation, is designed to handle a theoretical amount of wastewater. However, after installation and over time there is no good way to determine the capacity utilization or capacity shortage risk of the system and of different pump stations, there is also no optimal automatic way to decide/prioritise what part of the system and/or pump stations, that need to be upgraded or need service/maintenance.

There are known prior art, such as US 55979960 and EP 3567173, that disclose systems that provide alarm when flooding of a pump station is taking place or is imminent. However, such alarms are reactive and not proactive. Other methods are disclosed e.g. in EP2088401A and EP2796724A.

### Object of the Invention

The present invention aims at obviating the aforementioned disadvantages and failings of previously known pump station monitoring and control systems.

A primary object of the present invention is to provide an improved method for monitoring pump stations, whereby an operator may more accurately compare performance and capacity utilization of different pump stations working under different environmental conditions and over time in order to be able to prioritize service and maintenance of said pump stations.

It is an object of the present invention to provide an improved method for monitoring pump stations, whereby an operator may understand the pump station performance in relation to real life conditions and may determine available capacity margins of the pump stations.

It is an object of the present invention to provide an improved method for monitoring pump stations, whereby the method is proactive and provides tools for the operator to decide about investments.

### Summary of the Invention

According to the invention at least the primary object is attained by means of the initially defined method for monitoring the operation of a pump station, having the features defined in the independent claim. Preferred embodiments of the present invention are further defined in the dependent claims.

According to the present invention, there is provided a method for monitoring the operation of a pump station, wherein the pump station comprises a tank for temporary storage of a liquid, an inlet for influent liquid, an outlet and at least one pump configured for transporting the liquid away from the tank via said outlet, the method is characterized by the steps of:
- monitoring the inflow of liquid to the tank during at least a part of a predetermined time period (T) and determining Inflow data (IN) quantified in volume per time unit and that is representative for the inflow of liquid to the tank of the pump station during the predetermined time period (T), wherein said predetermined time period (T) is constituted by at least one pump cycle,
- determining Pump Station Max Capacity data (PSMC) quantified in volume per time unit and that is representative for the actual max capacity of pumped liquid volume from the tank of the pump station during the predetermined time period (T),
- for the predetermined time period, determining a momentary Pump Station Capacity Utilization (PSCU_{M}) based on the determined values of Inflow data (IN) and Pump Station Max Capacity data (PSMC), using the overall formula PSCU_{M} (%) = 100 * IN / PSMC, and
- determining a typical Pump Station Capacity Utilization (PSCU_{T}) for the pump station, that is representative for the capacity utilization of the pump station over time, based on a plurality of momentary Pump Station Capacity Utilization (PSCU_{M}) value.

Thus, the present invention is based on the insight of determining a typical Pump Station Capacity Utilization (PSCU_{T}) for the pump station based on one or more historical values and thereby the operator may monitor/analyze the trend/development of the typical Pump Station Capacity Utilization (PSCU_{T}). An increasing trend, and the rate of the increase, provides valuable input for the operator and/or may automatically provide trend alarm, and thereby future flooding may be prevented. The operator may also determine/analyze the risk of flooding of the pump station based on one value, or a few values, of typical Pump Station Capacity Utilization (PSCU_{T}). Thus, the operator assesses the capacity utilization, i.e. capacity margin, of the pump station and thereby the risk of flooding for different pump stations.

In particular, the determination of service/maintenance need is highly improved with the inventive method as values of typical Pump Station Capacity Utilization (PSCU_{T}) can be compared over time, i.e. before and after a change or service of the pump and/or parts of the pump station which is not possible with known methods. Thereto, by means of the inventive method different pump stations may be compared with each other. Thus, the operator is given a method that will help the operator to prioritize maintenance and investments in a pump station network.

Using the method according to the present invention one can determine if the dimension/design of an outlet piping from the pump station is optimal or not and/or if said outlet piping is getting clogged. In the method according to the present invention one can compare old measurement data with new measurement data regardless of the pump station is changed and/or the pump is renewed.

In various example embodiments of the present invention the step of determining the Inflow data (IN) comprises the sub-steps of:
- determining a rest-time (REST) required for the liquid level in the tank to rise from a pump stop liquid level (STOP) to a pump start liquid level (START) when no pump is active, wherein the rest-time (REST) is part of the predetermined time period (T),
- determining the Inflow data (IN) that is representative for the inflow of liquid during the predetermined time period (T) by dividing a volume (V) by the determined rest-time (REST), [V / REST], wherein the volume (V) is the liquid volume in the tank between said pump start liquid level (START) and said pump stop liquid level (STOP).

In various example embodiments of the present invention the step of determining the Pump Station Max Capacity data (PSMC) comprises the sub-steps of:
- determining a run-time (RUN) required for the liquid level in the tank to lower from a pump start liquid level (START) to a pump stop liquid level (STOP) when all pumps in the pump station are active concurrently and operated at maximum operational speed, wherein the run-time (RUN) is part of the predetermined time period (T), and
- determining the Pump Station Max Capacity data (PSMC) that is representative for the max capacity of the pump station during the predetermined time period (T) by dividing a volume (V) by the determined run-time (RUN) and adding the Inflow data (IN) representative for the inflow of liquid during the predetermined time period (T), [(V / RUN) + IN], wherein the volume (V) is the liquid volume in the tank between said pump start liquid level (START) and said pump stop liquid level (STOP).

It is advantageous to use said preferred embodiments whereby the determination of the momentary Pump Station Capacity Utilization is only dependent on rest-time (REST) and run-time (RUN) that is already available in most pump station monitoring units.

However, the inventive method is not limited to all pumps operating concurrently and at maximum operational speed, but is equally useful when not all pumps are active concurrently and/or is operating at reduced operational speed.

In various example embodiments of the present invention the pump station comprises a plurality of pumps constituted by a first subset of pumps (P1) and a second subset of pumps (P2), wherein the first subset of pumps (P1) and the second subset of pumps (P2) are not active concurrently during the predetermined time period (T), and wherein the step of determining the Pump Station Max Capacity data (PSMC) comprises the sub-steps of:
- determining a First Subset Max Capacity data (P1_MC) during a first pump cycle during the predetermined time period (T), wherein the First Subset Max Capacity data (P1_MC) is representative for the max capacity of the first subset of pumps (P1) during the predetermined time period (T),
- determining a Second Subset Max Capacity data (P2_MC) during a second pump cycle during the predetermined time period (T), wherein the Second Subset Max Capacity data (P2_MC) is representative for the max capacity of the second subset of pumps (P2) during the predetermined time period (T), and
- determining the Pump Station Max Capacity data (PSMC) that is representative for the max capacity of the pump station during the predetermined time period (T) by multiplying a reduction factor (X) with the sum of the First Subset Max Capacity data (P1_MC) and the Second Subset Max Capacity data (P2_MC), [X * (P1_MC + P2_MC)], wherein the reduction factor is in the range 0,5 - 0,9.

It is an important understanding of the inventors that the maximum capacity of all pumps of the pump station is not the sum of the max capacity of each subset of pumps.

In various example embodiments of the present invention the pumps of the first subset of pumps (P1) are active concurrently and operated at a reduced operational speed that is less than the maximum operational speed, and wherein the reduced operational speed corresponds to a reduced first Outflow (P1_Q_{R}) and an actual first run-time (P1_RUN_{A}) required for the liquid level in the tank to lower from a pump start liquid level (START) to a pump stop liquid level (STOP), wherein the determination of the first run-time (P1_RUN) comprises multiplying the actual first run-time (P1_RUN_{A}) with the ratio between the reduced first Outflow (P1_Q_{R}) and a maximum first Outflow (P1_Q_{M}), wherein the ratio between the reduced first Outflow (P1_Q_{R}) and the maximum first Outflow (P1_Q_{M}) is determined based on a predetermined relationship between operational speed and first Outflow (P1_Q), and the reduced operational speed.

In various example embodiments of the present invention the typical Pump Station Capacity Utilization (PSCU_{T}) is compared with predetermined thresholds A and B, wherein A is in the range 85-100% and B is equal to the ratio between the lowest of the First Subset Max Capacity data (P1_MC) and the Second Subset Max Capacity data (P2_MC) divided by the Pump Station Max Capacity data (PSMC), [100 * min(P1_MC;P2_MC) / PSMC], in order to estimate the capacity status of the pump station. Thereby an automatic alarm may be triggered in order to assist the operator, i.e. there is a risk that the pump station will become flooded if a peak inflow occur or if one pump malfunction, respectively.

Further advantages with and features of the invention will be apparent from the following detailed description of preferred embodiments.

### Further elucidation of prior art

Document EP2088401 monitors the liquid level in the tank and when the pumps are inactive just before an activation/pumping, the controller determines the inflow rate based on the liquid level change in the tank. This might be considered equal to the Inflow data IN of the present invention. Based on such determined inflow rate, when the pumps are active, the controller of EP2088401 determines the present outflow rate based on the liquid level change in the tank plus the determined inflow rate. The present outflow rate is not equivalent to the max capacity of the pump station. Thus, neither PSMC nor PSCU are dealt with in EP2088401.

### Brief description of the drawings

A more complete understanding of the abovementioned and other features and advantages of the present invention will be apparent from the following detailed description of preferred embodiments in conjunction with the appended drawing, wherein:

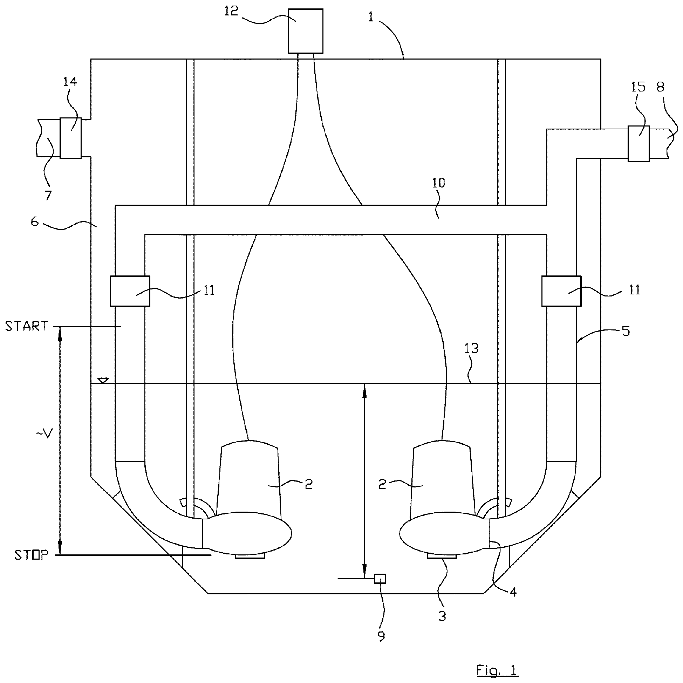

- Fig. 1: is a schematic view of an example embodiment of a pump station according to the present invention.

### Detailed description of preferred embodiments of the invention

The invention is applicable to a pump station and concern monitoring of a pump station. Reference is initially made to figure 1 illustrating a pump station 1, e.g. a wastewater pump station, however other liquids may be pumped and the invention is not limited to wastewater.

The pump station 1 comprises at least one pump 2 having an inlet 3 and an outlet 4, an outlet pipe 5 connected to the pump 2 and extending from the pump outlet 4. The pump station 1 comprises a tank 6, also known as reservoir, sump, etc. configured for temporary storage of liquid. The pump station 1 comprises an inlet 7 for incoming/influent liquid and an outlet 8 for discharged/effluent liquid. The pump 2 is configured for transporting the liquid away from the tank 6 via the outlet pipe 5 and said outlet 8. The pump 2 is preferably located in the tank 6, and the pump 2 may be located in partly or fully submerged position or in a dry position, or located in a dry position outside the tank 6.

The disclosed pump station 1 also comprises a level sensor 9 located in the tank 6 and preferably in a position always submerged when the pump station 1 is in operation. Thus, the level sensor 9 is preferably located below the inlet 3 of the pump 2. According to various alternative embodiments the level sensor is constituted by a dry installed level sensor, e.g. using ultrasound, radar, etc., hanging above the liquid level and/or located outside the tank 6. According to various embodiments the pump station 1 comprises a plurality of level sensors, such as level switches located at different levels in the tank, e.g. start level and stop level, which will be tilted by the liquid surface. The purpose of the level sensor 9, or level sensors, is to start and stop the pump 2 when the liquid surface is located at predetermined levels within the tank 6.

Usually the pump stations 1 comprises at least two pumps, wherein the second pump is used to prevent flooding and/or as a backup if the first pump malfunctions and/or the plurality of pumps alternate. The second pump having an inlet and an outlet, an outlet pipe 10 extending from the pump outlet and is connected to the outlet pipe 5 of the first pump 2. The pump station 1 may comprise one or more non-return valves 11 arranged to prevent the pumped flow from one of the pumps to return to the tank 6 via the other pump, and also to prevent the liquid in the outgoing piping from returning to the tank 6 when the pumps are deactivated. The plurality of pumps 2 may be of the same or different size, i.e. rated power and capacity.

A local control unit 12 is operatively connected to the pumps 2 and to different sensors in the pump station 1, and may further be operatively connected to a remote/external control unit (not shown). The local control unit may by partly or fully located inside the pump 2. External outlet piping is connected to the outlet 8 of the tank 6 and the external outlet piping guides the pumped liquid for example to another pump station and/or a wastewater plant. Everything described in connection with said at least one pump 2 is applicable also for the other pumps in the pump station 1. During operation of the pump station 1 the liquid level 13 in the tank 6 will rise and fall depending on the influent liquid and the operation of the pumps 2.

The inventive method comprises the steps of:
- monitoring the inflow of liquid to the tank 6 during at least a part of a predetermined time period (T) and determining Inflow data (IN) quantified in volume per time unit and that is representative for the inflow of liquid to the tank 6 of the pump station 1 during the predetermined time period (T), wherein said predetermined time period (T) is constituted by at least one pump cycle,
- determining Pump Station Max Capacity data (PSMC) quantified in volume per time unit and that is representative for the actual max capacity of pumped liquid volume from the tank 6 of the pump station 1 during the predetermined time period (T),
- for the predetermined time period, determining a momentary Pump Station Capacity Utilization (PSCU_{M}) based on the determined values of Inflow data (IN) and Pump Station Max Capacity data (PSMC), using the overall formula PSCU_{M} (%) = 100 * IN / PSMC, and
- determining a typical Pump Station Capacity Utilization (PSCU_{T}) for the pump station 1, that is representative for the capacity utilization of the pump station 1 over time, based on a plurality of momentary Pump Station Capacity Utilization (PSCU_{M}) value.

Said predetermined time period (T) is preferably one or more pump cycles, wherein each pump cycle extends from one deactivation of the pump 2 to the next deactivation of the pump 2 an includes one period wherein the pump 2 is inactive and the liquid level 13 in the tank 6 increases (goes up) and one period wherein the pump is active and the liquid level 13 in the tank 6 decreases (goes down). According to the embodiments wherein the predetermined time period (T) comprises a plurality of pump cycles, said pump cycles are preferably consecutive pump cycles. According to various alternatives the predetermined time period (T) is constituted by one or more hours, or one or more days (i.e. 24 hours), or one or more weeks. It is known that the inflow to a pump station 1 alters during the day, during the week and also during the year. It is preferred that the predetermined time period (T) is equal to or less than one hour.

Capacity is the amount of liquid that can be transported from or through the pump station 1. The capacity is dependent on the max capacity of the different pumps, outlet piping diameters, and wear and condition of pumps and piping. Capacity utilization is the incoming flow of liquid compared to the pump station 1 capacity.

Said Inflow data (IN), i.e. the inflow to the pump station 1, and said Pump Station Max Capacity data (PSMC), i.e. the maximum effluent from the pump station 1, are quantified in volume per time unit, such as liters per second. The Inflow data (IN) can be constituted by the actual/true inflow during the entire predetermined time period (T), the actual/true inflow during a part of said time period (T), an average value over the time period (T) based on a plurality of measurements, etc., i.e. the Inflow data (IN) shall provide a good representation of the inflow volume/characteristics during the predetermined time period (T). The Pump Station Max Capacity data (PSMC) can be constituted by the actual/true volume of the pumped liquid during the entire predetermined time period (T), the actual/true pumped volume during a part of said time period (T), an average value over the time period (T) based on a plurality of measurements, etc., i.e. the Pump Station Max Capacity data (PSMC) shall provide a good representation of the pumped volume/characteristics during the predetermined time period (T).

The Pump Station Max Capacity data (PSMC) is the maximum Outflow (Q_{M}) corresponding to all pumps 2 in the pump station 1 being active concurrently and operated at maximum operational speed, e.g. rated operational speed. The maximum Outflow (Q_{M}) will change over time due to wear of the pumps 2, clogging of the outlet piping, size of the pumps 2, size of the outlet piping, number of pumps 2 in the pump station 1, etc. Thus, the Pump Station Max Capacity data (PSMC) shall provide a good representation of the maximum output volume from the pump station 1, i.e. from the pumps 2 of the pump station 1. It shall be pointed out that in some pump stations and /or during certain situations, not all installed pumps 2 in a pump station 1 are allowed to be active concurrently and/or be operated at rated operational speed, due to physical or design constraints of the specific pump station and/or outlet piping. Thus, herein, the term "all pumps 2 of the pump station 1 being active concurrently and operated at maximum operational speed" shall be understood to mean "the combination of pumps 2 in the pump station 1 that are allowed to be active concurrently and operated at maximum allowable operational speed and that provides the maximum outflow (Q_{M}) from the pump station 1". Thus, the maximum allowable speed providing the maximum outflow (Q_{M}) from the pump station may not necessarily be the rated operational speed.

The typical Pump Station Capacity Utilization (PSCU_{T}) for the pump station 1 is based on at least one momentary Pump Station Capacity Utilization (PSCU_{M}) value, preferably a plurality of momentary values. The typical Pump Station Capacity Utilization (PSCU_{T}) shall provide a good representation about the capacity utilization of the pump station 1 over time. The typical Pump Station Capacity Utilization (PSCU_{T}) can be constituted by the maximum momentary Pump Station Capacity Utilization (PSCU_{M}) value per day, per week, per month, etc., or an average of a plurality of momentary Pump Station Capacity Utilization (PSCU_{M}) values per day, per week, per month, etc., or an average of historic peak values the last month, quarter year, half year, etc.

The typical Pump Station Capacity Utilization (PSCU_{T}) value for the pump station 1, and the trend of the typical value, provides a base for the operator to make decisions about service, maintenance, renewal, up-sizing, etc.

According to various embodiments the step of determining the Inflow data (IN) comprises the sub-steps of:
- determining a rest-time (REST) required for the liquid level in the tank 6 to rise from a pump stop liquid level (STOP) to a pump start liquid level (START) when no pump 2 is active, wherein the rest-time (REST) is part of the predetermined time period (T),
- determining the Inflow data (IN) that is representative for the inflow of liquid during the predetermined time period (T) by dividing a volume (V) by the determined rest-time (REST), [V / REST], wherein the volume (V) is the liquid volume in the tank 6 between said pump start liquid level (START) and said pump stop liquid level (STOP).

When no pump 2 is active is defined as no liquid is discharged from the pump station. Thus, a slowly rotating impeller in the pump will not generate any outflow and the pump 2 is defined as inactive. The volume (V) and the rest-time (REST) can alternatively be determined using other known/preset liquid levels in the tank 6. Thus, the volume (V) and the rest-time (REST) can be determined in many different ways instead of using the pump start liquid level (START) and the pump stop liquid level (STOP), i.e. may be determined using a subset of the volume between the pump stop liquid level and the pump start liquid level. Thus, on a more general level, herein the volume (V) shall be regarded as a predetermined volume in the tank 6, which volume is delimited by an upper liquid level (UP) and a lower liquid level (LOW), and the rest-time (REST) shall be determined using the lower liquid level (LOW) and the upper liquid level (UP), wherein pump start liquid level (START) and pump stop liquid level (STOP) are specific values of the general terms upper liquid level (UP) and lower liquid level (LOW), respectively.

Thus, according to various embodiments the step of determining the Inflow data (IN) comprises the sub-steps of:
- determining a rest-time (REST) required for the liquid level in the tank 6 to rise from a lower liquid level (LOW) to an upper liquid level (UP) when no pump 2 is active, wherein the rest-time (REST) is part of the predetermined time period (T),
- determining the Inflow data (IN) that is representative for the inflow of liquid during the predetermined time period (T) by dividing a volume (V) by the determined rest-time (REST), [V / REST], wherein the volume (V) is the liquid volume in the tank 6 between said upper liquid level (UP) and said lower liquid level (LOW).

According to alternative embodiments the Inflow data (IN) is determined using an inlet flowmeter 14, in order to determine the actual inflow during a part of or during the entire predetermined time period (T).

When all pumps 2 are active concurrently and are operated at maximum operational speed, the step of determining the Pump Station Max Capacity data (PSMC) comprises the sub-steps of:
- determining a run-time (RUN) required for the liquid level in the tank 6 to lower from the pump start liquid level (START) to the pump stop liquid level (STOP), wherein the run-time (RUN) is part of the predetermined time period (T), and
- determining the Pump Station Max Capacity data (PSMC) that is representative for the max capacity of the pump station 1 during the predetermined time period (T) by dividing a volume (V) by the determined run-time (RUN) and adding the Inflow data (IN) representative for the inflow of liquid during the predetermined time period (T), [(V / RUN) + IN].

The run-time (RUN) can alternatively be determined using other known/set liquid levels in the tank 6. In line with the above, the run-time (RUN) can be determined in many different ways instead of using the pump start liquid level (START) and the pump stop liquid level (STOP), i.e. may be determined using a subset of the volume between the pump stop liquid level and the pump start liquid level. Thus, on a more general level, herein the run-time (RUN) shall be determined using said upper liquid level (UP) and said lower liquid level (LOW).

Thus, according to alternative embodiments, when all pumps 2 are active concurrently and are operated at maximum operational speed, the step of determining the Pump Station Max Capacity data (PSMC) comprises the sub-steps of:
- determining a run-time (RUN) required for the liquid level in the tank 6 to lower from the upper liquid level (UP) to the lower liquid level (LOW), wherein the run-time (RUN) is part of the predetermined time period (T), and
- determining the Pump Station Max Capacity data (PSMC) that is representative for the max capacity of the pump station 1 during the predetermined time period (T) by dividing a volume (V) by the determined run-time (RUN) and adding the Inflow data (IN) representative for the inflow of liquid during the predetermined time period (T), [(V / RUN) + IN], wherein the volume (V) is the liquid volume in the tank 6 between said upper liquid level (UP) and said lower liquid level (LOW).

Thus, according to the preferred embodiment a single pump cycle is constituted by one rest-time (REST) and one run-time (RUN).

According to alternative embodiments the Pump Station Max Capacity data (PSMC) is determined using an outlet flowmeter 15, in order to determine the actual outflow during a part of or during the entire predetermined time period (T).

When using the preferred embodiments to determine the Inflow data (IN) and the Pump Station Max Capacity data (PSMC) the volume (V) parameter is both in the numerator and in the denominator and can be omitted/excluded.

All pumps 2 are active concurrently and are operated at maximum/rated operational speed is for instance during a so-called outlet pipe cleaning sequence, that can be scheduled in the control unit 12, manually initiated by an operator, automatically initiated by the control unit 12 based on need, or during high inflow wherein one pump 2 is not sufficient. In a well-functioning and properly dimensioned pump station 1 there is almost never need for all pumps 2 to be active concurrently and be operated at maximum/rated operational speed in order to handle the incoming liquid.

According to various embodiments the pump station 1 comprises a plurality of pumps 2, and these pumps are constituted by a first subset of pumps (P1) and a second subset of pumps (P2). In most pump stations 1 the first subset of pumps (P1) and the second subset of pumps (P2), respectively, is constituted by a single pump 2, however, the first subset of pumps (P1) and/or the second subset of pumps (P2) may comprises a plurality of pumps 2.

When all pumps 2 are not active concurrently and the active pumps 2 are operated at maximum operational speed, the step of determining the Pump Station Max Capacity data (PSMC) comprises the sub-steps of:
- determining a First Subset Max Capacity data (P1_MC) during a first pump cycle during the predetermined time period (T), wherein the First Subset Max Capacity data (P1_MC) is representative for the max capacity of the first subset of pumps (P1) during the predetermined time period (T),
- determining a Second Subset Max Capacity data (P2_MC) during a second pump cycle during the predetermined time period (T), wherein the Second Subset Max Capacity data (P2_MC) is representative for the max capacity of the second subset of pumps (P2) during the predetermined time period (T), and
- determining the Pump Station Max Capacity data (PSMC) that is representative for the max capacity of the pump station 1 during the predetermined time period (T) by multiplying a reduction factor (X) with the sum of the First Subset Max Capacity data (P1_MC) and the Second Subset Max Capacity data (P2_MC), [X * (P1_MC + P2_MC)], wherein the reduction factor is in the range 0,6 - 0,9.

It shall be pointed out that any of the said first pump cycle and said second pump cycle can occur first in time, and the pump cycles can take place directly after each other or be separated in time.

The reduction factor (X) is used since the maximum Outflow (Q_{M}) when all pumps 2 are active and operated at maximum operation speed is not equal to the sum of the individual outflow of each pump 2. This phenomenon comes from increasing flow resistance in the outlet piping in relation to increasing flow velocity.

As default the reduction factor (X) is preferably set to 0,7. However, the reduction factor (X) is preferably updated at regular intervals based on known values of Pump Station Max Capacity data (PSMC), the First Subset Max Capacity data (P1_MC) and the Second Subset Max Capacity data (P2_MC). Preferably the last known values of set parameters are used. These values/parameters are determined as stated above and below. The reduction factor (X) is updated/determined by dividing the Pump Station Max Capacity data (PSMC) with the sum of the First Subset Max Capacity data (P1_MC) and the Second Subset Max Capacity data (P2_MC), [PSMC / (P1_MC + P2_MC)].

According to various embodiments, the step of determining the First Subset Max Capacity data (P1_MC) comprises the sub-steps of:
- determining a first run-time (P1_RUN) required for the liquid level 13 in the tank 6 to lower from a pump start liquid level (START) to a pump stop liquid level (STOP) when the pumps of the first subset of pumps (P1) are active concurrently and operated at maximum operational speed, wherein the first run-time (P1_RUN) is part of the predetermined time period (T), and
- determining the First Subset Max Capacity data (P1_MC) by dividing a volume (V) by the determined first run-time (P1_RUN) and adding a first Inflow data (P1_IN) that is representative for the inflow of liquid during the first pump cycle, [(V / P1_RUN) + P1_IN].

According to various embodiments, the first Inflow data (P1_IN) is determined using the sub-steps of:
- determining a first rest-time (P1_REST) required for the liquid level 13 in the tank 6 to rise from a pump stop liquid level (STOP) to a pump start liquid level (START) when no pump 2 is active, wherein the first rest-time (P1_REST) is part of the predetermined time period (T), and
- determining the first Inflow data (P1_IN) that is representative for the inflow of liquid during the predetermined time period (T) by dividing a volume (V) by the determined first rest-time (P1_REST), [V / P1_REST].

According to various embodiments, the step of determining the Second Subset Max Capacity data (P2_MC) comprises the sub-steps of:
- determining a second run-time (P2_RUN) required for the liquid level 13 in the tank 6 to lower from a pump start liquid level (START) to a pump stop liquid level (STOP) when the pumps of the second subset of pumps (P2) are active concurrently and operated at maximum operational speed, wherein the second run-time (P2_RUN) is part of the predetermined time period (T), and
- determining the Second Subset Max Capacity data (P2_MC) by dividing a volume (V) by the determined second run-time (P2_RUN) and adding a second Inflow data (P2_IN) that is representative for the inflow of liquid during the second pump cycle, [(V / P2_RUN) + P2_IN].

According to various embodiments, the second Inflow data (P2_IN) is determined using the sub-steps of:
- determining a second rest-time (P2_REST) required for the liquid level in the tank 6 to rise from a pump stop liquid level (STOP) to a pump start liquid level (START) when no pump 2 is active, wherein the second rest-time (P2_REST) is part of the predetermined time period (T), and
- determining the second Inflow data (P2_IN) that is representative for the inflow of liquid during the predetermined time period (T) by dividing a volume (V) by the determined second rest-time (P2_REST), [V / P2_REST].

According to an alternative embodiment the first rest-time (P1_REST) and the second rest-time (P2_REST) can be the same value and be determined simultaneously. It shall be pointed out that when the pump station 1 comprises more than two different subsets of pumps, the above logic is copied/used for each possible subset of pumps.

When all pumps 2 are not active concurrently and the active pumps 2 are operated at a reduced operational speed that is less than the maximum operational speed, there must be a compensation in order to be able to determine the above run-times of the first subset of pumps (P1) and the second subset of pumps (P2). For each subset of pumps in the specific pump station 1, there is a known/predetermined relationship between the operational speed and outflow. The maximum operational speed provides a maximum outflow and a reduced operational speed provides a reduced outflow. The pumps 2 comprises internal and/or external Variable Frequency Drive (VFD) in order to be operated at reduced operational speed.

Thus, when the pumps of the first subset of pumps (P1) are active concurrently and operated at a reduced operational speed, said reduced operational speed corresponds to a reduced first Outflow (P1_Q_{R}) and an actual first run-time (P1_RUN_{A}) required for the liquid level in the tank 6 to lower from a pump start liquid level (START) to a pump stop liquid level (STOP). The determination of the first run-time (P1_RUN) comprises multiplying the actual first run-time (P1_RUN_{A}) with the ratio between the reduced first Outflow (P1_Q_{R}) and a maximum first Outflow (P1_Q_{M}), wherein the ratio between the reduced first Outflow (P1_Q_{R}) and the maximum first Outflow (P1_Q_{M}) is determined based on a predetermined relationship between operational speed and first Outflow (P1_Q), and the reduced operational speed.

Thus, when the pumps of the second subset of pumps (P2) are active concurrently and operated at a reduced operational speed, said reduced operational speed corresponds to a reduced second Outflow (P2_Q_{R}) and an actual second run-time (P2_RUN_{A}) required for the liquid level in the tank () to lower from a pump start liquid level (START) to a pump stop liquid level (STOP). The determination of the second run-time (P2_RUN) comprises multiplying the actual second run-time (P2_RUN_{A}) with the ratio between the reduced second Outflow (P2_Q_{R}) and a maximum second Outflow (P2_Q_{M}), wherein the ratio between the reduced second Outflow (P2_Q_{R}) and the maximum second Outflow (P2_Q_{M}) is determined based on a predetermined relationship between operational speed and second Outflow (P2_Q), and the reduced operational speed.

In line with the above, please note that first run-time, second run-time, first rest-time, second rest-time, etc. alternatively may be determined using the general terms upper liquid level (UP) and lower liquid level (LOW) instead of the specific terms pump start liquid level (START) and the pump stop liquid level (STOP).

When the operator or the control unit 12 has access to the typical Pump Station Capacity Utilization (PSCU_{T}) value/values, said value/values can be compared with predetermined thresholds A and B, in order to estimate the capacity status of the pump station 1. Threshold A is preferably in the range 85-100% and threshold B is preferably equal to the ratio between the lowest of the First Subset Max Capacity data (P1_MC) and the Second Subset Max Capacity data (P2_MC) divided by the Pump Station Max Capacity data (PSMC), [100 * min(P1_MC;P2_MC) / PSMC]. Threshold B is usually in the range 60-80%.

The typical Pump Station Capacity Utilization (PSCU_{T}) is determined based on the weekly peak values for the last 1-10 weeks, or the weekly average values for the last 1-10 weeks, or the 1-10 highest historic values.

When the typical Pump Station Capacity Utilization (PSCU_{T}) is below threshold B, there is no problem since each pump 2 is capable of pumping the typical inflow.

When the typical Pump Station Capacity Utilization (PSCU_{T}) is below threshold A but above threshold B, there might be a problem to discharge/pump the typical inflow if one of the pumps 2 malfunction.

When the typical Pump Station Capacity Utilization (PSCU_{T}) is above threshold A, there is an imminent problem to handle the typical inflow since not even all pumps are capable of pumping the typical inflow.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims.

Thus, the equipment may be modified in all kinds of ways within the scope of the appended claims.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. A method for monitoring the operation of a pump station (1), wherein the pump station (1) comprises a tank (6) for temporary storage of a liquid, an inlet (7) for influent liquid, an outlet (8), and at least one pump (2) configured for transporting the liquid away from the tank (6) via said outlet (8),
the method comprising the steps of:
- monitoring the inflow of liquid to the tank (6) during at least a part of a predetermined time period (T) and determining Inflow data (IN) quantified in volume per time unit and that is representative for the inflow of liquid to the tank (6) of the pump station (1) during the predetermined time period (T), wherein said predetermined time period (T) is constituted by at least one pump cycle,
- determining Pump Station Max Capacity data (PSMC) quantified in volume per time unit and that is representative for the actual max capacity of pumped liquid volume from the tank (6) of the pump station (1) during the predetermined time period (T),
- for the predetermined time period, determining a momentary Pump Station Capacity Utilization (PSCU_{M}) based on the determined values of Inflow data (IN) and Pump Station Max Capacity data (PSMC), using the overall formula PSCU_{M} (%) = 100 * IN / PSMC, and
- determining a typical Pump Station Capacity Utilization (PSCU_{T}) for the pump station (1), that is representative for the capacity utilization of the pump station (1) over time, based on a plurality of momentary Pump Station Capacity Utilization (PSCU_{M}) value.

2. The method according to claim 1, wherein the step of determining the Inflow data (IN) comprises the sub-steps of:
- determining a rest-time (REST) required for the liquid level (13) in the tank (6) to rise from a pump stop liquid level (STOP) to a pump start liquid level (START) when no pump (2) is active, wherein the rest-time (REST) is part of the predetermined time period (T),
- determining the Inflow data (IN) that is representative for the inflow of liquid during the predetermined time period (T) by dividing a volume (V) by the determined rest-time (REST), [V / REST], wherein the volume (V) is the liquid volume in the tank (6) between said pump start liquid level (START) and said pump stop liquid level (STOP).

3. The method according to claim 1 or 2, wherein the Pump Station Max Capacity data (PSMC) is the actual maximum Outflow (Q_{M}) corresponding to all pumps (2) in the pump station (1) being active concurrently and operated at maximum operational speed.

4. The method according to any of claims 1-3, wherein the step of determining the Pump Station Max Capacity data (PSMC) comprises the sub-steps of:
- determining a run-time (RUN) required for the liquid level (13) in the tank (6) to lower from a pump start liquid level (START) to a pump stop liquid level (STOP) when all pumps (2) in the pump station (1) are active concurrently and operated at maximum operational speed, wherein the run-time (RUN) is part of the predetermined time period (T), and
- determining the Pump Station Max Capacity data (PSMC) that is representative for the actual max capacity of the pump station (1) during the predetermined time period (T) by dividing a volume (V) by the determined run-time (RUN) and adding the Inflow data (IN) representative for the inflow of liquid during the predetermined time period (T), [(V / RUN) + IN], wherein the volume (V) is the liquid volume in the tank (6) between said pump start liquid level (START) and said pump stop liquid level (STOP).

5. The method according to claim 4, wherein the pump station (1) comprises a plurality of pumps (2) constituted by a first subset of pumps (P1) and a second subset of pumps (P2), wherein the first subset of pumps (P1) and the second subset of pumps (P2) are not active concurrently during the predetermined time period (T), and wherein a reduction factor (X) is determined using the sub-steps of:
- determining a First Subset Max Capacity data (P1_MC) during a first pump cycle during the predetermined time period (T), wherein the First Subset Max Capacity data (P1_MC) is representative for the actual max capacity of the first subset of pumps (P1) during the predetermined time period (T),
- determining a Second Subset Max Capacity data (P2_MC) during a second pump cycle during the predetermined time period (T), wherein the Second Subset Max Capacity data (P2_MC) is representative for the actual max capacity of the second subset of pumps (P2) during the predetermined time period (T), and
- determining a reduction factor (X) by dividing the Pump Station Max Capacity data (PSMC) with the sum of the First Subset Max Capacity data (P1_MC) and the Second Subset Max Capacity data (P2_MC), [PSMC / (P1_MC + P2_MC)].

6. The method according to any of claims 1-3, wherein the pump station (1) comprises a plurality of pumps (2) constituted by a first subset of pumps (P1) and a second subset of pumps (P2), wherein the first subset of pumps (P1) and the second subset of pumps (P2) are not active concurrently during the predetermined time period (T), and wherein the step of determining the Pump Station Max Capacity data (PSMC) comprises the sub-steps of:
- determining a First Subset Max Capacity data (P1_MC) during a first pump cycle during the predetermined time period (T), wherein the First Subset Max Capacity data (P1_MC) is representative for the actual max capacity of the first subset of pumps (P1) during the predetermined time period (T),
- determining a Second Subset Max Capacity data (P2_MC) during a second pump cycle during the predetermined time period (T), wherein the Second Subset Max Capacity data (P2_MC) is representative for the actual max capacity of the second subset of pumps (P2) during the predetermined time period (T), and
- determining the Pump Station Max Capacity data (PSMC) that is representative for the max capacity of the pump station (1) during the predetermined time period (T) by multiplying a reduction factor (X) with the sum of the First Subset Max Capacity data (P1_MC) and the Second Subset Max Capacity data (P2_MC), [X * (P1_MC + P2_MC)], wherein the reduction factor is in the range 0,6 - 0,9.

7. The method according to claim 6, wherein the step of determining the First Subset Max Capacity data (P1_MC) comprises the sub-steps of:
- determining a first run-time (P1_RUN) required for the liquid level in the tank (6) to lower from a pump start liquid level (START) to a pump stop liquid level (STOP) when the pumps of the first subset of pumps (P1) are active concurrently and operated at maximum operational speed, wherein the first run-time (P1_RUN) is part of the predetermined time period (T), and
- determining the First Subset Max Capacity data (P1_MC) by dividing a volume (V) by the determined first run-time (P1_RUN) and adding a first Inflow data (P1_IN) that is representative for the inflow of liquid during the first pump cycle, [(V / P1_RUN) + P1_IN], wherein the volume (V) is the liquid volume in the tank (6) between said pump start liquid level (START) and said pump stop liquid level (STOP).

8. The method according to claim 7, wherein the first Inflow data (P1_IN) comprises the sub-steps of:
- determining a first rest-time (P1_REST) required for the liquid level in the tank (6) to rise from a pump stop liquid level (STOP) to a pump start liquid level (START) when no pump (2) is active, wherein the first rest-time (P1_REST) is part of the predetermined time period (T), and
- determining the first Inflow data (P1_IN) that is representative for the inflow of liquid during the predetermined time period (T) by dividing a volume (V) by the determined first rest-time (P1_REST), [V / P1_REST], wherein the volume (V) is the liquid volume in the tank (6) between said pump start liquid level (START) and said pump stop liquid level (STOP).

9. The method according to any of claims 6-8, wherein the step of determining the Second Subset Max Capacity data (P2_MC) comprises the sub-steps of:
- determining a second run-time (P2_RUN) required for the liquid level in the tank (6) to lower from a pump start liquid level (START) to a pump stop liquid level (STOP) when the pumps of the second subset of pumps (P2) are active concurrently and operated at maximum operational speed, wherein the second run-time (P2_RUN) is part of the predetermined time period (T), and
- determining the Second Subset Max Capacity data (P2_MC) by dividing a volume (V) by the determined second run-time (P2_RUN) and adding a second Inflow data (P2_IN) that is representative for the inflow of liquid during the second pump cycle, [(V / P2_RUN) + P2_IN], wherein the volume (V) is the liquid volume in that tank (6) between said pump start liquid level (START) and said pump stop liquid level (STOP).

10. The method according to claim 9, wherein the second Inflow data (P2_IN) comprises the sub-steps of:
- determining a second rest-time (P2_REST) required for the liquid level in the tank (6) to rise from a pump stop liquid level (STOP) to a pump start liquid level (START) when no pump (2) is active, wherein the second rest-time (P2_REST) is part of the predetermined time period (T), and
- determining the second Inflow data (P2_IN) that is representative for the inflow of liquid during the predetermined time period (T) by dividing a volume (V) by the determined second rest-time (P2_REST), [V / P2_REST], wherein the volume (V) is the liquid volume in the tank (6) between said pump start liquid level (START) and said pump stop liquid level (STOP).

11. The method according to claim 7 or 8, wherein the pumps of the first subset of pumps (P1) are active concurrently and operated at a reduced operational speed that is less than the maximum operational speed, and wherein the reduced operational speed corresponds to a reduced first Outflow (P1_Q_{R}) and an actual first run-time (P1_RUN_{A}) required for the liquid level (13) in the tank (6) to lower from a pump start liquid level (START) to a pump stop liquid level (STOP), wherein the determination of the first run-time (P1_RUN) comprises multiplying the actual first run-time (P1_RUN_{A}) with the ratio between the reduced first Outflow (P1_Q_{R}) and a maximum first Outflow (P1_Q_{M}), wherein the ratio between the reduced first Outflow (P1_Q_{R}) and the maximum first Outflow (P1_Q_{M}) is determined based on a predetermined relationship between operational speed and first Outflow (P1_Q), and the reduced operational speed.

12. The method according to claim 9 or 10, wherein the pumps of the second subset of pumps (P2) are active concurrently and operated at a reduced operational speed that is less than the maximum operational speed, and wherein the reduced operational speed corresponds to a reduced second Outflow (P2_Q_{R}) and an actual second run-time (P2_RUN_{A}) required for the liquid level (13) in the tank (6) to lower from a pump start liquid level (START) to a pump stop liquid level (STOP), wherein the determination of the second run-time (P2_RUN) comprises multiplying the actual second run-time (P2_RUN_{A}) with the ratio between the reduced second Outflow (P2_Q_{R}) and a maximum second Outflow (P2_Q_{M}), wherein the ratio between the reduced second Outflow (P2_Q_{R}) and the maximum second Outflow (P2_Q_{M}) is determined based on a predetermined relationship between operational speed and second Outflow (P2_Q), and the reduced operational speed.

13. The method according to any preceding claim, wherein the typical Pump Station Capacity Utilization (PSCU_{T}) is compared with predetermined thresholds A and B, wherein A is in the range 85-100% and B is equal to the ratio between the lowest of the First Subset Max Capacity data (P1_MC) and the Second Subset Max Capacity data (P2_MC) divided by the Pump Station Max Capacity data (PSMC), [100 * min(P1_MC;P2_MC) / PSMC], in order to estimate the capacity status of the pump station (1).

14. The method according to any preceding claim, wherein the typical Pump Station Capacity Utilization (PSCU_{T}) is determined based on the weekly peak values for the last 1-10 weeks, or the weekly average values for the last 1-10 weeks, or the 1-10 highest historic values.

## Patentansprüche

1. Verfahren zur Überwachung des Betriebs einer Pumpstation (1), wobei die Pumpstation (1) einen Tank (6) zur vorübergehenden Speicherung einer Flüssigkeit, einen Einlass (7) für zufließende Flüssigkeit, einen Auslass (8), und mindestens eine Pumpe (2) aufweist, die dazu eingerichtet ist, die Flüssigkeit über den Auslass (8) aus dem Tank (6) abzutransportieren,
wobei das Verfahren die Schritte umfasst:
- Überwachen des Zuflusses von Flüssigkeit zum Tank (6) während mindestens eines Teils eines vorbestimmten Zeitraums (T) und Bestimmen von Zuflussdaten (IN), die in Volumen pro Zeiteinheit quantifiziert sind und für den Zufluss von Flüssigkeit zum Tank (6) der Pumpstation (1) während des vorbestimmten Zeitraums (T) repräsentativ sind, wobei der vorbestimmte Zeitraum (T) durch mindestens einen Pumpzyklus gebildet ist,
- Bestimmen von Pumpstation-Maximalkapazitätsdaten (PSMC), die in Volumen pro Zeiteinheit quantifiziert sind und für die tatsächliche Maximalkapazität von gepumptem Flüssigkeitsvolumen aus dem Tank (6) der Pumpstation (1) während des vorbestimmten Zeitraums (T) repräsentativ sind,
- Bestimmen, für den vorbestimmten Zeitraum, einer momentanen Pumpstation-Kapazitätsauslastung (PSCU_{M}) basierend auf den bestimmten Werten von Zuflussdaten (IN) und Pumpstation-Maximalkapazitätsdaten (PSMC) unter Verwendung der Gesamtformel PSCU_{M}(%)=100*IN/PSMC, und
- Bestimmen einer typischen Pumpstation-Kapazitätsauslastung (PSCU_{T}) für die Pumpstation (1), die repräsentativ für die Kapazitätsauslastung der Pumpstation (1) über die Zeit ist, basierend auf mehreren Werten von momentaner Pumpstation-Kapazitätsauslastung (PSCUM).

2. Verfahren nach Anspruch 1, wobei der Schritt des Bestimmens der Zuflussdaten (IN) die Teilschritte umfasst:
- Bestimmen einer Ruhezeit (REST), die benötigt wird, damit der Flüssigkeitsstand (13) im Tank (6) von einem Pumpenstopp-Flüssigkeitsstand (STOP) auf einen Pumpenstart-Flüssigkeitsstand (START) ansteigt, wenn keine Pumpe (2) aktiv ist, wobei die Ruhezeit (REST) Teil des vorbestimmten Zeitraums (T) ist,
- Bestimmen der Zuflussdaten (IN), die für den Zufluss von Flüssigkeit während des vorbestimmten Zeitraums (T) repräsentativ sind, durch Teilen eines Volumens (V) durch die bestimmte Ruhezeit (REST), [V/REST], wobei das Volumen (V) das Flüssigkeitsvolumen im Tank (6) zwischen dem genannten Pumpenstart-Flüssigkeitsstand (START) und dem genannten Pumpenstopp-Flüssigkeitsstand (STOP) ist.

3. Verfahren nach Anspruch 1 oder 2, wobei die Pumpstation-Maximalkapazitätsdaten (PSMC) der entsprechende tatsächliche maximale Abfluss (Q_{M}) ist, wenn alle Pumpen (2) in der Pumpstation (1) gleichzeitig aktiv sind und mit maximaler Betriebsgeschwindigkeit betrieben werden.

4. Verfahren nach einem der Ansprüche 1-3, wobei der Schritt des Bestimmens der Pumpstation-Maximalkapazitätsdaten (PSMC) die Teilschritte umfasst:
- Bestimmen einer Laufzeit (RUN), die benötigt wird, damit der Flüssigkeitsstand (13) im Tank (6) von einem Pumpenstart-Flüssigkeitsstand (START) auf einen Pumpenstopp-Flüssigkeitsstand (STOP) sinkt, wenn alle Pumpen (2) in der Pumpstation (1) gleichzeitig aktiv sind und mit maximaler Betriebsgeschwindigkeit betrieben werden, wobei die Laufzeit (RUN) Teil des vorbestimmten Zeitraums (T) ist, und
- Bestimmen der Pumpstation-Maximalkapazitätsdaten (PSMC), die für die tatsächliche Maximalkapazität der Pumpstation (1) während des vorbestimmten Zeitraums (T) repräsentativ sind, durch Teilen eines Volumens (V) durch die bestimmte Laufzeit (RUN) und Addieren der Zuflussdaten (IN), die für den Zufluss von Flüssigkeit während des vorbestimmten Zeitraums (T) repräsentativ sind, [(V/RUN)+IN], wobei das Volumen (V) das Flüssigkeitsvolumen im Tank (6) zwischen dem genannten Pumpenstart-Flüssigkeitsstand (START) und dem genannten Pumpenstopp-Flüssigkeitsstand (STOP) ist.

5. Verfahren nach Anspruch 4, wobei die Pumpstation (1) eine Vielzahl von Pumpen (2) aufweist, die durch eine erste Untergruppe von Pumpen (P1) und eine zweite Untergruppe von Pumpen (P2) gebildet wird, wobei die erste Untergruppe von Pumpen (P1) und die zweite Untergruppe von Pumpen (P2) während des vorbestimmten Zeitraums (T) nicht gleichzeitig aktiv sind, und wobei ein Reduktionsfaktor (X) unter Verwendung der Teilschritte bestimmt wird:
- Bestimmen von Maximalkapazitätsdaten (P1_MC) der ersten Untergruppe während eines ersten Pumpzyklus während des vorbestimmten Zeitraums (T), wobei die Maximalkapazitätsdaten (P1_MC) der ersten Untergruppe repräsentativ für die tatsächliche Maximalkapazität der ersten Untergruppe von Pumpen (P1) während des vorbestimmten Zeitraums (T) sind,
- Bestimmen von Maximalkapazitätsdaten (P2_MC) der zweiten Untergruppe während eines zweiten Pumpzyklus während des vorbestimmten Zeitraums (T), wobei die Maximalkapazitätsdaten (P2_MC) der zweiten Untergruppe repräsentativ für die tatsächliche Maximalkapazität der zweiten Untergruppe von Pumpen (P2) während des vorbestimmten Zeitraums (T) sind, und
- Bestimmen eines Reduktionsfaktors (X) durch Teilen der Pumpstation-Maximalkapazitätsdaten (PSMC) durch die Summe der Maximalkapazitätsdaten (P1_MC) der ersten Untergruppe und der Maximalkapazitätsdaten (P2_MC) der zweiten Untergruppe, [PSMC/(P1_MC+P2_MC)].

6. Verfahren nach einem der Ansprüche 1-3, wobei die Pumpstation (1) eine Vielzahl von Pumpen (2) aufweist, die durch eine erste Untergruppe von Pumpen (P1) und eine zweite Untergruppe von Pumpen (P2) gebildet wird, wobei die erste Untergruppe von Pumpen (P1) und die zweite Untergruppe von Pumpen (P2) während des vorbestimmten Zeitraums (T) nicht gleichzeitig aktiv sind, und wobei der Schritt des Bestimmens der Pumpstation-Maximalkapazitätsdaten (PSMC) die Teilschritte umfasst:
- Bestimmen von Maximalkapazitätsdaten (P1_MC) der ersten Untergruppe während eines ersten Pumpzyklus während des vorbestimmten Zeitraums (T), wobei die Maximalkapazitätsdaten (P1_MC) der ersten Untergruppe repräsentativ für die tatsächliche Maximalkapazität der ersten Untergruppe von Pumpen (P1) während des vorbestimmten Zeitraums (T) sind,
- Bestimmen von Maximalkapazitätsdaten (P2_MC) der zweiten Untergruppe während eines zweiten Pumpzyklus während des vorbestimmten Zeitraums (T), wobei die Maximalkapazitätsdaten (P2_MC) der zweiten Untergruppe repräsentativ für die tatsächliche Maximalkapazität der zweiten Untergruppe von Pumpen (P2) während des vorbestimmten Zeitraums (T) sind, und
- Bestimmen der Pumpstation-Maximalkapazitätsdaten (PSMC), die für die Maximalkapazität der Pumpstation (1) während des vorbestimmten Zeitraums (T) repräsentativ sind, durch Multiplizieren eines Reduktionsfaktors (X) mit der Summe der Maximalkapazitätsdaten (P1_MC) der ersten Untergruppe und der Maximalkapazitätsdaten (P2_MC) der zweiten Untergruppe, [X*(P1_MC+P2_MC)], wobei der Reduktionsfaktor im Bereich von 0,6-0,9 ist.

7. Verfahren nach Anspruch 6, wobei der Schritt des Bestimmens der Maximalkapazitätsdaten (P1_MC) der ersten Untergruppe die Teilschritte umfasst:
- Bestimmen einer ersten Laufzeit (P1_RUN), die benötigt wird, damit der Flüssigkeitsstand im Tank (6) von einem Pumpenstart-Flüssigkeitsstand (START) auf einen Pumpenstopp-Flüssigkeitsstand (STOP) absinkt, wenn die Pumpen der ersten Untergruppe von Pumpen (P1) gleichzeitig aktiv sind und mit maximaler Betriebsgeschwindigkeit betrieben werden, wobei die erste Laufzeit (P1_RUN) Teil des vorbestimmten Zeitraums (T) ist, und
- Bestimmen der Maximalkapazitätsdaten (P1_MC) der ersten Untergruppe durch Teilen eines Volumens (V) durch die bestimmte erste Laufzeit (P1_RUN) und Addieren erster Zuflussdaten (P1_IN), die repräsentativ für den Zufluss von Flüssigkeit während des ersten Pumpzyklus sind, [(V/P1_RUN)+P1_IN], wobei das Volumen (V) das Flüssigkeitsvolumen im Tank (6) zwischen dem genannten Pumpenstart-Flüssigkeitsstand (START) und dem genannten Pumpenstopp-Flüssigkeitsstand (STOP) ist.

8. Verfahren nach Anspruch 7, wobei die ersten Zuflussdaten (P1_IN) die Teilschritte umfassen:
- Bestimmen einer ersten Ruhezeit (P1_REST), die benötigt wird, damit der Flüssigkeitsstand im Tank (6) von einem Pumpenstopp-Flüssigkeitsstand (STOP) auf einen Pumpenstart-Flüssigkeitsstand (START) ansteigt, wenn keine Pumpe (2) aktiv ist, wobei die erste Ruhezeit (P1_REST) Teil des vorbestimmten Zeitraums (T) ist, und
- Bestimmen der ersten Zuflussdaten (P1_IN), die für den Zufluss von Flüssigkeit während des vorbestimmten Zeitraums (T) repräsentativ sind, durch Teilen eines Volumens (V) durch die bestimmte erste Ruhezeit (P1_REST), [V/P1_REST], wobei das Volumen (V) das Flüssigkeitsvolumen im Tank (6) zwischen dem genannten Pumpenstart-Flüssigkeitsstand (START) und dem genannten Pumpenstopp-Flüssigkeitsstand (STOP) ist.

9. Verfahren nach einem der Ansprüche 6-8, wobei der Schritt des Bestimmens der Maximalkapazitätsdaten (P2_MC) der zweiten Untergruppe die Teilschritte umfasst:
- Bestimmen einer zweiten Laufzeit (P2_RUN), die benötigt wird, damit der Flüssigkeitsstand im Tank (6) von einem Pumpenstart-Flüssigkeitsstand (START) auf einen Pumpenstopp-Flüssigkeitsstand (STOP) sinkt, wenn die Pumpen der zweiten Untergruppe von Pumpen (P2) gleichzeitig aktiv sind und mit maximaler Betriebsgeschwindigkeit betrieben werden, wobei die zweite Laufzeit (P2_RUN) Teil des vorbestimmten Zeitraums (T) ist, und
- Bestimmen der Maximalkapazitätsdaten (P2_MC) der zweiten Untergruppe durch Teilen eines Volumens (V) durch die bestimmte zweite Laufzeit (P2_RUN) und Addieren zweiter Zuflussdaten (P2_IN), die für den Zufluss von Flüssigkeit während des zweiten Pumpzyklus repräsentativ sind, [(V/P2_RUN)+P2_IN], wobei das Volumen (V) das Flüssigkeitsvolumen in diesem Tank (6) zwischen dem genannten Pumpenstart-Flüssigkeitsstand (START) und dem genannten Pumpenstopp-Flüssigkeitsstand (STOP) ist.

10. Verfahren nach Anspruch 9, wobei die zweiten Zuflussdaten (P2_IN) die Teilschritte umfassen:
- Bestimmen einer zweiten Ruhezeit (P2_REST), die benötigt wird, damit der Flüssigkeitsstand im Tank (6) von einem Pumpenstopp-Flüssigkeitsstand (STOP) auf einen Pumpenstart-Flüssigkeitsstand (START) ansteigt, wenn keine Pumpe (2) aktiv ist, wobei die zweite Ruhezeit (P2_REST) Teil des vorbestimmten Zeitraums (T) ist, und
- Bestimmen der zweiten Zuflussdaten (P2_IN), die für den Zufluss von Flüssigkeit während des vorbestimmten Zeitraums (T) repräsentativ sind, durch Teilen eines Volumens (V) durch die bestimmte zweite Ruhezeit (P2_REST), [V/P2_REST], wobei das Volumen (V) das Flüssigkeitsvolumen im Tank (6) zwischen dem genannten Pumpenstart-Flüssigkeitsstand (START) und dem genannten Pumpenstopp-Flüssigkeitsstand (STOP) ist.

11. Verfahren nach Anspruch 7 oder 8, wobei die Pumpen der ersten Untergruppe von Pumpen (P1) gleichzeitig aktiv sind und mit einer reduzierten Betriebsgeschwindigkeit betrieben werden, die geringer ist als die maximale Betriebsgeschwindigkeit, und wobei die reduzierte Betriebsgeschwindigkeit einem reduzierten ersten Abfluss (P1_Q_{R}) und einer tatsächlichen ersten Laufzeit (P1_RUN_{A}) entspricht, die benötigt wird, damit der Flüssigkeitsstand (13) im Tank (6) von einem Pumpenstart-Flüssigkeitsstand (START) auf einen Pumpenstopp-Flüssigkeitsstand (STOP) sinkt, wobei die Bestimmung der ersten Laufzeit (P1_RUN) Multiplizieren der tatsächlichen ersten Laufzeit (P1_RUN_{A}) mit dem Verhältnis zwischen dem reduzierten ersten Abfluss (P1_Q_{R}) und einem maximalen ersten Abfluss (P1_Q_{M}) umfasst, wobei das Verhältnis zwischen dem reduzierten ersten Abfluss (P1_Q_{R}) und dem maximalen ersten Abfluss (P1_Q_{M}) basierend auf einer vorbestimmten Beziehung zwischen Betriebsgeschwindigkeit und erstem Abfluss (P1_Q) und der reduzierten Betriebsgeschwindigkeit bestimmt wird.

12. Verfahren nach Anspruch 9 oder 10, wobei die Pumpen der zweiten Untergruppe von Pumpen (P2) gleichzeitig aktiv sind und mit einer reduzierten Betriebsgeschwindigkeit betrieben werden, die geringer ist als die maximale Betriebsgeschwindigkeit, und wobei die reduzierte Betriebsgeschwindigkeit einem reduzierten zweiten Abfluss (P2_Q_{R}) und einer tatsächlichen zweiten Laufzeit (P2_RUN_{A}) entspricht, die benötigt wird, damit der Flüssigkeitsstand (13) im Tank (6) von einem Pumpenstart-Flüssigkeitsstand (START) auf einen Pumpenstopp-Flüssigkeitsstand (STOP) sinkt, wobei die Bestimmung der zweiten Laufzeit (P2_RUN) Multiplizieren der tatsächlichen zweiten Laufzeit (P2_RUN_{A}) mit dem Verhältnis zwischen dem reduzierten zweiten Abfluss (P2_Q_{R}) und einem maximalen zweiten Abfluss (P2_Q_{M}) umfasst, wobei das Verhältnis zwischen dem reduzierten zweiten Abfluss (P2_Q_{R}) und dem maximalen zweiten Abfluss (P2_Q_{M}) basierend auf einer vorbestimmten Beziehung zwischen Betriebsgeschwindigkeit und zweitem Ausfluss (P2_Q) und der reduzierten Betriebsgeschwindigkeit bestimmt wird.

13. Verfahren nach einem der vorstehenden Ansprüche, wobei die typische Pumpstation-Kapazitätsauslastung (PSCU_{T}) mit vorbestimmten Schwellenwerten A und B verglichen wird, wobei A im Bereich von 85-100 % ist und B gleich dem Verhältnis zwischen dem niedrigsten der Maximalkapazitätsdaten (P1_MC) der ersten Untergruppe und der Maximalkapazitätsdaten (P2_MC) der zweiten Untergruppe (P2_MC) geteilt durch die Pumpstation-Maximalkapazitätsdaten (PSMC), [100*min(P1_MC;P2_MC)/PSMC], um den Kapazitätsstatus der Pumpstation (1) zu schätzen.

14. Verfahren nach einem der vorstehenden Ansprüche, wobei die typische Pumpstation-Kapazitätsauslastung (PSCU_{T}) basierend auf den wöchentlichen Spitzenwerten der letzten 1-10 Wochen, oder den wöchentlichen Durchschnittswerten der letzten 1-10 Wochen, oder den 1-10 höchsten historischen Werten bestimmt wird.

## Revendications

1. Procédé de surveillance du fonctionnement d'une station de pompage (1), dans lequel la station de pompage (1) comporte un réservoir (6) de stockage temporaire d'un liquide, une entrée (7) de liquide influent, une sortie (8), et au moins une pompe (2) configurée pour éloigner le liquide du réservoir (6) via ladite sortie (8), le procédé comportant les étapes de :
- la surveillance de l'arrivée de liquide dans le réservoir (6) pendant au moins une partie d'une période de temps prédéterminée (T) et la détermination de données d'arrivée (IN) quantifiées en volume par unité de temps et qui sont représentatives de l'arrivée de liquide dans le réservoir (6) de la station de pompage (1) pendant la période de temps prédéterminée (T), dans lequel ladite période de temps prédéterminée (T) est constituée d'au moins un cycle de pompage,
- la détermination de données de contenance maximale de station de pompage (PSMC) quantifiées en volume par unité de temps et qui sont représentatives de la contenance maximale réelle de volume de liquide pompé à partir du réservoir (6) de la station de pompage (1) pendant la période de temps prédéterminée (T),
- pour la période de temps prédéterminée, la détermination d'une utilisation de contenance de station de pompage momentanée (PSCU_{M}) sur la base des valeurs déterminées des données d'arrivée (IN) et des données de contenance maximale de station de pompage (PSMC), à l'aide de la formule globale PSCU_{M} (%) = 100 * IN/PSMC, et
- la détermination d'une utilisation de contenance de station de pompage typique (PSCU_{T}) pour la station de pompage (1), qui est représentative de l'utilisation de contenance de la station de pompage (1) au fil du temps, sur la base d'une pluralité de valeurs d'utilisation de contenance de station de pompage momentanée (PSCU_{M}).

2. Procédé selon la revendication 1, dans lequel l'étape de détermination des données d'arrivée (IN) comporte les sous-étapes de :
- la détermination d'un temps de repos (REST) nécessaire pour que le niveau de liquide (13) dans le réservoir (6) monte d'un niveau de liquide d'arrêt de pompe (STOP) à un niveau de liquide de démarrage de pompe (START) lorsque aucune pompe (2) n'est active, dans lequel le temps de repos (REST) fait partie de la période de temps prédéterminée (T),
- la détermination des données d'arrivée (IN) qui sont représentatives de l'arrivée de liquide pendant la période de temps prédéterminée (T) en divisant un volume (V) par le temps de repos déterminé (REST), [V/REST], dans lequel le volume (V) est le volume de liquide dans le réservoir (6) entre ledit niveau de liquide de démarrage de pompe (START) et ledit niveau de liquide d'arrêt de pompe (STOP).

3. Procédé selon la revendication 1 ou 2, dans lequel les données de contenance maximale de station de pompage (PSMC) sont le débit de sortie maximal réel (Q_{M}) correspondant à toutes les pompes (2) dans la station de pompage (1) étant actives simultanément et fonctionnant à une vitesse de fonctionnement maximale.

4. Procédé selon l'une quelconque des revendications 1 à 3, dans lequel l'étape de détermination des données de contenance maximale de station de pompage (PSMC) comporte les sous-étapes de :
- la détermination d'un temps de fonctionnement (RUN) nécessaire pour que le niveau de liquide (13) dans le réservoir (6) baisse d'un niveau de liquide de démarrage de pompe (START) à un niveau de liquide d'arrêt de pompe (STOP) lorsque toutes les pompes (2) dans la station de pompage (1) sont actives simultanément et fonctionnent à une vitesse de fonctionnement maximale, dans lequel le temps de fonctionnement (RUN) fait partie de la période de temps prédéterminée (T), et
- la détermination des données de contenance maximale de station de pompage (PSMC) qui sont représentatives de la contenance maximale réelle de la station de pompage (1) pendant la période de temps prédéterminée (T) en divisant un volume (V) par le temps de fonctionnement déterminé (RUN) et l'ajout des données d'arrivée (IN) représentatives de l'arrivée de liquide pendant la période de temps prédéterminée (T), [(V/RUN) + IN], dans lequel le volume (V) est le volume de liquide dans le réservoir (6) entre ledit niveau de liquide de démarrage de pompe (START) et ledit niveau de liquide d'arrêt de pompe (STOP).

5. Procédé selon la revendication 4, dans lequel la station de pompage (1) comporte une pluralité de pompes (2) constituées d'un premier sous-ensemble de pompes (P1) et d'un second sous-ensemble de pompes (P2), dans lequel le premier sous-ensemble de pompes (P1) et le second sous-ensemble de pompes (P2) ne sont pas actifs simultanément pendant la période de temps prédéterminée (T), et dans lequel un facteur de réduction (X) est déterminé à l'aide des sous-étapes de :
- la détermination d'une donnée de contenance maximale de premier sous-ensemble (P1_MC) pendant un premier cycle de pompe pendant la période de temps prédéterminée (T), dans lequel la donnée de contenance maximale de premier sous-ensemble (P1_MC) est représentative de la contenance maximale réelle du premier sous-ensemble de pompes (P1) pendant la période de temps prédéterminée (T),
- la détermination d'une donnée de contenance maximale de second sous-ensemble (P2_MC) pendant un second cycle de pompe pendant la période de temps prédéterminée (T), dans lequel la donnée de contenance maximale de second sous-ensemble (P2_MC) est représentative de la contenance maximale réelle du second sous-ensemble de pompes (P2) pendant la période de temps prédéterminée (T), et
- la détermination d'un facteur de réduction (X) en divisant les données de contenance maximale de station de pompage (PSMC) par la somme de la donnée de contenance maximale de premier sous-ensemble (P1_MC) et de la donnée de contenance maximale de second sous-ensemble (P2_MC), [PSMC/(P1_MC + P2_MC)].

6. Procédé selon l'une quelconque des revendications 1 à 3, dans lequel la station de pompage (1) comporte une pluralité de pompes (2) constituées d'un premier sous-ensemble de pompes (P1) et d'un second sous-ensemble de pompes (P2), dans lequel le premier sous-ensemble de pompes (P1) et le second sous-ensemble de pompes (P2) ne sont pas actifs simultanément pendant la période de temps prédéterminée (T), et dans lequel l'étape de détermination des données de contenance maximale de station de pompage (PSMC) comporte les sous-étapes de :
- la détermination d'une donnée de contenance maximale de premier sous-ensemble (P1_MC) pendant un premier cycle de pompe pendant la période de temps prédéterminée (T), dans lequel la donnée de contenance maximale de premier sous-ensemble (P1_MC) est représentative de la contenance maximale réelle du premier sous-ensemble de pompes (P1) pendant la période de temps prédéterminée (T),
- la détermination d'une donnée de contenance maximale de second sous-ensemble (P2_MC) pendant un second cycle de pompe pendant la période de temps prédéterminée (T), dans lequel la donnée de contenance maximale de second sous-ensemble (P2_MC) est représentative de la contenance maximale réelle du second sous-ensemble de pompes (P2) pendant la période de temps prédéterminée (T), et
- la détermination des données de contenance maximale de station de pompage (PSMC) qui sont représentatives de la contenance maximale de la station de pompage (1) pendant la période de temps prédéterminée (T) en multipliant un facteur de réduction (X) par la somme de la donnée de contenance maximale de premier sous-ensemble (P1_MC) et de la donnée de contenance maximale de second sous-ensemble (P2_MC), [X * (P1_MC + P2_MC)], dans lequel le facteur de réduction est dans la plage de 0,6 à 0,9.

7. Procédé selon la revendication 6, dans lequel l'étape de détermination de la donnée de contenance maximale de premier sous-ensemble (P1_MC) comporte les sous-étapes de :
- la détermination d'un premier temps de fonctionnement (P1_RUN) nécessaire pour que le niveau de liquide dans le réservoir (6) diminue d'un niveau de liquide de démarrage de pompe (START) à un niveau de liquide d'arrêt de pompe (STOP) lorsque les pompes du premier sous-ensemble de pompes (P1) sont actives simultanément et fonctionnent à une vitesse de fonctionnement maximale, dans lequel le premier temps de fonctionnement (P1_RUN) fait partie de la période de temps prédéterminée (T), et
- la détermination de la donnée de contenance maximale de premier sous-ensemble (P1_MC) en divisant un volume (V) par le premier temps de fonctionnement déterminé (P1_RUN) et en ajoutant une première donnée d'arrivée (P1_IN) qui est représentative de l'arrivée de liquide pendant le premier cycle de pompage, [(V/P1_RUN) + P1_IN], dans lequel le volume (V) est le volume de liquide dans le réservoir (6) entre ledit niveau de liquide de démarrage de pompe (START) et ledit niveau de liquide d'arrêt de pompe (STOP).

8. Procédé selon la revendication 7, dans lequel la première donnée d'arrivée (P1_IN) comporte les sous-étapes de :
- la détermination d'un premier temps de repos (P1_REST) nécessaire pour que le niveau de liquide dans le réservoir (6) monte d'un niveau de liquide d'arrêt de pompe (STOP) à un niveau de liquide de démarrage de pompe (START) lorsque aucune pompe (2) n'est active, dans lequel le premier temps de repos (P1_REST) fait partie de la période de temps prédéterminée (T), et
- la détermination de la première donnée d'arrivée (P1_IN) qui est représentative de l'arrivée de liquide pendant la période de temps prédéterminée (T) en divisant un volume (V) par le premier temps de repos déterminé (P1_REST), [V/P1_REST], dans lequel le volume (V) est le volume de liquide dans le réservoir (6) entre ledit niveau de liquide de démarrage de pompe (START) et ledit niveau de liquide d'arrêt de pompe (STOP).

9. Procédé selon l'une quelconque des revendications 6 à 8, dans lequel l'étape de détermination de la donnée de contenance maximale de second sous-ensemble (P2_MC) comporte les sous-étapes de :
- la détermination d'un second temps de fonctionnement (P2_RUN) nécessaire pour que le niveau de liquide dans le réservoir (6) diminue d'un niveau de liquide de démarrage de pompe (START) à un niveau de liquide d'arrêt de pompe (STOP) lorsque les pompes du second sous-ensemble de pompes (P2) sont actives simultanément et fonctionnent à une vitesse de fonctionnement maximale, dans lequel le second temps de fonctionnement (P2_RUN) fait partie de la période de temps prédéterminée (T), et
- la détermination de la donnée de contenance maximale de second sous-ensemble (P2_MC) en divisant un volume (V) par le second temps de fonctionnement déterminé (P2_RUN) et en ajoutant une seconde donnée d'arrivée (P2_IN) qui est représentative de l'arrivée de liquide pendant le second cycle de pompage, [(V/P2_RUN) + P2_IN], dans lequel le volume (V) est le volume de liquide dans ce réservoir (6) entre ledit niveau de liquide de démarrage de pompe (START) et ledit niveau de liquide d'arrêt de pompe (STOP).

10. Procédé selon la revendication 9, dans lequel la seconde données d'arrivée (P2_IN) comporte les sous-étapes de :
- la détermination d'un second temps de repos (P2_REST) nécessaire pour que le niveau de liquide dans le réservoir (6) monte d'un niveau de liquide d'arrêt de pompe (STOP) à un niveau de liquide de démarrage de pompe (START) lorsque aucune pompe (2) n'est active, dans lequel le second temps de repos (P2_REST) fait partie de la période de temps prédéterminée (T), et
- la détermination de la seconde donnée d'arrivée (P2_IN) qui est représentative de l'arrivée de liquide pendant la période de temps prédéterminée (T) en divisant un volume (V) par le second temps de repos déterminé (P2_REST), [V/P2_REST], dans lequel le volume (V) est le volume de liquide dans le réservoir (6) entre ledit niveau de liquide de démarrage de pompe (START) et ledit niveau de liquide d'arrêt de pompe (STOP).

11. Procédé selon la revendication 7 ou 8, dans lequel les pompes du premier sous-ensemble de pompes (P1) sont actives simultanément et fonctionnent à une vitesse de fonctionnement réduite qui est inférieure à la vitesse de fonctionnement maximale, et dans lequel la vitesse de fonctionnement réduite correspond à un premier débit de sortie réduit (P1_Q_{R}) et à un premier temps de fonctionnement réel (P1_RUN_{A}) nécessaire pour que le niveau de liquide (13) dans le réservoir (6) descende d'un niveau de liquide de démarrage de pompe (START) à un niveau de liquide d'arrêt de pompe (STOP), dans lequel la détermination du premier temps de fonctionnement (P1_RUN) comporte la multiplication du premier temps de fonctionnement réel (P1_RUN_{A}) par le rapport entre le premier débit de sortie réduit (P1_Q_{R}) et un premier débit de sortie maximal (P1_Q_{M)}, dans lequel le rapport entre le premier débit de sortie réduit (P1_Q_{R}) et le premier débit de sortie maximal (P1_Q_{M}) est déterminé sur la base d'une relation prédéterminée entre la vitesse de fonctionnement et le premier débit de sortie (P1_Q), et la vitesse de fonctionnement réduite.

12. Procédé selon la revendication 9 ou 10, dans lequel les pompes du second sous-ensemble de pompes (P2) sont actives simultanément et fonctionnent à une vitesse de fonctionnement réduite qui est inférieure à la vitesse de fonctionnement maximale, et dans lequel la vitesse de fonctionnement réduite correspond à un second débit de sortie réduit (P2_Q_{R}) et à un second temps de fonctionnement réel (P2_RUN_{A}) nécessaire pour que le niveau de liquide (13) dans le réservoir (6) descende d'un niveau de liquide de démarrage de pompe (START) à un niveau de liquide d'arrêt de pompe (STOP), dans lequel la détermination du second temps de fonctionnement (P2_RUN) comporte la multiplication du second temps de fonctionnement réel (P2_RUN_{A}) par le rapport entre le second débit de sortie réduit (P2_Q_{R}) et un second débit de sortie maximal (P2_Q_{M}), dans lequel le rapport entre le second débit de sortie réduit (P2_Q_{R}) et le second débit de sortie maximal (P2_Q_{M}) est déterminé sur la base d'une relation prédéterminée entre la vitesse de fonctionnement et le second débit de sortie (P2_Q), et la vitesse de fonctionnement réduite.

13. Procédé selon une quelconque revendication précédente, dans lequel l'utilisation de contenance de station de pompage typique (PSCU_{T}) est comparée à des seuils prédéterminés A et B, dans lequel A est dans la plage de 85 à 100 % et B est égal au rapport entre la valeur la plus petite de la donnée de contenance maximale de premier sous-ensemble (P1_MC) et de la donnée de contenance maximale de second sous-ensemble (P2_MC) divisée par les données de contenance maximale de la station de pompage (PSMC), [100 * min(P1_MC;P2_MC)/PSMC], afin d'estimer l'état de contenance de la station de pompage (1).

14. Procédé selon une quelconque revendication précédente, dans lequel l'utilisation de contenance de station de pompage typique (PSCU_{T}) est déterminée sur la base des valeurs de pic hebdomadaires pour les 1 à 10 dernières semaines, ou des valeurs moyennes hebdomadaires pour les 1 à 10 dernières semaines, ou des 1 à 10 valeurs historiques les plus élevées.
